# EUROPÄISCHE PATENTSCHRIFT

(11) **EP 2 329 571 B1**
(45) Veröffentlichungstag und Bekanntmachung des Hinweises auf die Patenterteilung: **02.10.2019**
(21) Anmeldenummer: 09781504.7
(22) Anmeldetag: 05.08.2009
(51) Int. Cl.: H02G 11/00, H02G 3/04, F16G 13/16

(54) **LEITUNGSFÜHRUNGSEINRICHTUNG SOWIE VERFAHREN ZUM HERSTELLEN EINES ELEMENTES EINER LEITUNGSFÜHRUNGSEINRICHTUNG**
CONDUIT DEVICE AND METHOD FOR PRODUCING AN ELEMENT OF A CONDUIT DEVICE
DISPOSITIF DE GUIDAGE DE LIGNES ET PROCÉDÉ DE FABRICATION D'UN ÉLÉMENT D'UN DISPOSITIF DE GUIDAGE DE LIGNES

(30) Priorität: 26.09.2008 DE 102008049246
(43) Veröffentlichungstag der Anmeldung: 08.06.2011
(73) Patentinhaber: Tsubaki Kabelschlepp GmbH, 57482 Wenden-Gerlingen (DE)
(72) Erfinder: WENDIG, Thomas, 57581 Katzwinkel/Elkhausen (DE); SCHÖLER, Dirk, 57234 Wilnsdorf (DE); BÖHM, Andreas, 57078 Siegen (DE)
(74) Vertreter: KNH Patentanwälte Neumann Heine Taruttis PartG mbB
(86) Internationale Anmeldenummer: PCT/EP2009/060135
(87) Internationale Veröffentlichungsnummer: WO 2010/034557

(56) Entgegenhaltungen:
- EP-A- 1 898 430
- DE-A1-102004 022 937
- DE-U1- 20 119 778
- DE-U1- 20 313 163
- DE-U1-202004 005 800
- DE-U1-202006 019 022
- GB-A- 2 419 883

## Beschreibung

Gegenstand der vorliegenden Erfindung ist ein Element für eine Leitungsführungseinrichtung zum Führen von Kabeln, Leitungen, Schläuchen und dergleichen, die auch als Energieführungskette bezeichnet wird, sowie eine entsprechende Leitungsführungseinrichtung. Weiterhin wird ein Verfahren zum Herstellen eines Elementes einer Leitungsführungseinrichtung vorgeschlagen.

Leitungsführungseinrichtungen werden zum Führen von Kabeln, Leitungen, Schläuchen und dergleichen zwischen einem ersten und einem zweiten Anschlusspunkt eingesetzt. Mindestens einer der Anschlusspunkte ist beweglich, beispielsweise verfahrbar. So können beispielsweise Werkzeuge, Maschinen und ähnliches mit Strom, Druckluft, Hydraulik- oder Pneumatikdruck, Steuersignalen und ähnlichem versorgt werden. Weiterhin können auch Daten vom beweglichen Anschluss zum festen Anschluss geleitet werden.

Es gibt Bereiche, in denen eine elektrostatische Aufladung der Leitungsführungseinrichtung, die beispielsweise durch Reibung beim Bewegen der Leitungsführungseinrichtung erzeugt wird, problematisch ist, beispielsweise bei der Herstellung und/oder Handhabung von Halbleiterbauteilen und/oder elektronischen Bauteile bei der Herstellung und/oder Handhabung von Kunststoff und/oder Glas. Um hier Schädigungen der Bauteile zu verhindern und/oder die Handhabung zu ermöglichen, ist es notwendig, die elektrostatische Aufladung der Leitungsführungseinrichtung abzuleiten. Oft sind Leitungsführungseinrichtungen aus mehreren Elementen wie beispielsweise Kettengliedern aus Kunststoff aufgebaut, welcher eine so geringe elektrische Leitfähigkeit aufweist, dass ein Ableiten der elektrostatischen Aufladung nicht möglich ist.

Durch die Druckschrift DE 20 2006 019 022 U1 ist ein Schlauchbündel bekannt, bei dem mehrere Schläuche in einer Hülle angeordnet sind. Derartige mehrlumige Kabelschutzrohre werden bspw. im Erdreich eingegraben. Sie werden auch im medizinischen Bereich verwendet, um über die verschiedenen Lumen Stoffe gezielt in oder aus einem Körper zu leiten.

Eine Ausgestaltung einer Leitungsführungseinrichtung ist durch die Druckschrift DE 10 2004 022 937 A1 bekannt. Die Leitungsführungseinrichtung ist durch Elemente gebildet, wobei jedes Element aus einem Material umfassend mindestens einen Kunststoff und einen Zusatzstoff gebildet ist. Zur verbesserten Ableitung einer elektrostatischen Ladung wird ein antistatisches Additiv, wie Kohlenpulver oder Kohlenfasern, dem Ausgangsmaterial des Elements hinzugefügt.

Die Druckschrift DE 203 13 163 U1 beschreibt einen wärmeschrumpfbaren Schutzschlauch mit verbesserter Abrieb-, Chemikalien- und Wärmeverformbeständigkeit bei hohen Temperaturen. Derartige wärmeschrumpfbare Schutzschläuche finden unter anderem im Fahrzeugbau Anwendung.

Durch die Druckschrift EP 1 898 430 A1 ist eine Leitungsführungseinheit bekannt, welche Rohre umfasst, die zur Aufnahme von Leitungen geeignet sind. Mindestens zwei Rohre sind miteinander durch Querstreben verbunden.

Das Gebrauchsmuster DE 201 19 778 U1 beschreibt einen Kunststoffschlauch, insbesondere einen Pneumatikschlauch, an dem mindestens eine elektrische Leitung angeordnet ist. Im Kunststoffmaterial der Schlauchwandung sind leitfähige Bereiche vorgesehen, die durch elektrisch teitfähige Partikel gebildet sind.

Durch GB 2,419,883 A ist ein elektrisch und wärmeleitendes Verbundmaterial bekannt, wobei ein Matrixmaterial des Verbunds von Natur aus ein nicht leitfähiges Material ist. Das Matrixmaterial wird leitend gemacht, indem es mit einem wärmeleitenden elektrisch leitenden Füllstoff beladen wird. Bei dem Füllstoff handelt es sich um Kunststoffstrukturen.

Eine Leitungsführungseinrichtung ist durch die DE 20 2004 005 800 U1 bekannt.

Die Leitungsführungseinrichtung dient zum Führen von Kabeln, Leitungen, Schläuchen oder dergleichen zwischen einem ersten und einem zweiten Anschlusspunkt, wobei mindestens eine der Anschlusspunkte beweglich ist. Die dort beschriebene Leitungsführungseinrichtung umfasst mindestens ein Element, wobei das Element aus einem Material umfassend mindestens einen Kunststoff und einen Zusatzstoff, wobei es sich bei dem Zusatzstoff auch um Kohlenstoff handeln kann, ausgebildet ist. Zur Erhöhung bzw. zur Bereitstellung einer ausreichend hohen Leitfähigkeit der Elemente wird die Oberfläche der jeweiligen Glieder mit einer leitfähigen Beschichtung versehen, bspw. mit einer Graphitierung oder einer Beschichtung mit einem metallischen oder halbleitenden Werkstoff bspw. durch Galvanisieren, Verdampfungsverfahren oder dergleichen.

Von daher liegt der vorliegenden Erfindung die Aufgabe zugrunde eine Leitungsführungseinrichtung und ein entsprechendes Herstellungsverfahren anzugeben, mit dem die aus dem Stand der Technik bekannten Nachteile zumindest verbessert werden können und eine Leitungsführungseinrichtung, sowie ein entsprechendes Herstellungsverfahren anzugeben, mit dem eine Ableitung der statischen Aufladung im Betrieb erfolgen kann.

Diese Aufgaben werden gelöst durch die Merkmale der unabhängigen Ansprüche. Die jeweils abhängigen Ansprüche sind auf vorteilhafte Weiterbildungen gerichtet.

Das Element einer erfindungsgemäßenLeitungsführungseinrichtung zum Führen von Kabeln, Leitungen, Schläuchen und dergleichen zwischen einem ersten und einem zweiten Anschlusspunkt ist aus einem Material umfassend mindestens einen Kunststoff und einen Zusatzstoff enthaltend Kohlenstoff ausgebildet. Erfindungsgemäß umfasst der Zusatzstoff Kohlenstoffnanoröhren.

Unter Kohlenstoffnanoröhren versteht man Strukturen aus Kohlenstoffatomen, die dreidimensionale röhrenartige Gebilde darstellen. Kohlenstoffnanoröhren können üblicherweise durch einen chiralen Aufrollvektor R charakterisiert werden, der als R=ma+nb dargestellt werden kann. Hierbei stellen m und n natürliche Zahlen dar. Die Vektoren a und b beschreiben die Einheitszelle einer einzelnen Graphitebene. Unter Kohlenstoffnanoröhren werden hier insbesondere chirale, Armstuhl- (arm chair) und/oder Zickzack-Kohlenstoffnanoröhren verstanden. Weiterhin werden unter dem Begriff Kohlenstoffnanoröhren auch insbesondere sogenannte Doppelt- und Multiwandkohlenstoffnanoröhren (DWNT, double wall nano tubes und MWNT, multi wall nano tubes) verstanden. Hierbei liegen die Röhren konzentrisch über- beziehungsweise ineinander.

Durch Zugabe von Kohlenstoffnanoröhren zum Kunststoff bei der Ausbildung von Elementen von Leitungsführungseinrichtungen zum Führen von Kabeln, Leitungen, Schläuchen und dergleichen und entsprechender Leitungsführungseinrichtungen kommt es zu einer Erhöhung der elektrischen Leitfähigkeit des Materials der Leitungsführungseinrichtungen und zur Herabsetzung des entsprechenden elektrischen Widerstandes. Unter dem Begriff Leitungsführungseinrichtung werden hierbei unter anderem auch sogenannte Energieführungsketten verstanden, die beispielsweise durch Aneinanderreihen mehrerer Kettenglieder oder auch durch Verbinden verschiedener Bauteile mit einem Grundbauteil ausgebildet werden können. Unter einem Element einer Leitungsführungseinrichtung wird hier insbesondere eine Kettenlasche, ein Quersteg, ein Kettenglied, Verbindungselemente für Kettenglieder, Tragelemente für Kettenglieder und dergleichen verstanden.

Durch die erhöhte elektrische Leitfähigkeit können elektrostatische Aufladungen abgeleitet werden. Diese elektrostatischen Aufladungen können beispielsweise beim Betrieb der Leitungsführungseinrichtungen zwischen einem ersten festen und einem zweiten beweglichen Anschlusspunkt oder zwischen zwei beweglichen Anschlusspunkten erzeugt werden. Durch die erfindungsgemäße Ausgestaltung des Elements einer Leitungsführungseinrichtung kann eine entsprechende Leitungsführungseinrichtung auch in sogenannten ESD-Bereichen (ESD- electrostatic discharge) bzw. in sogenannten ESD- geschützten Bereichen eingesetzt werden. Dies betrifft beispielsweise die Herstellung, Bearbeitung und Verpackung von Halbleiterbauelementen, Kunststoffelementen, insbesondere Kunststofffolie, Papier, Textilien und/oder Glas.

Gemäß einer vorteilhaften Ausgestaltung umfasst der Zusatzstoff Kohlenstofffasern.

Bevorzugt ist also der Einsatz einer Mischung aus Kohlenstofffasern und Kohlenstoffnanoröhren als Zusatzstoff. Bevorzugt sind hierbei Mischungsverhältnisse von mit 25 Gew.-% Zusatzstoff, insbesondere 20 Gew.-% Kohlenstofffasern und 5 Gew.-% Kohlenstoffnanoröhren.

Gemäß einer weiteren vorteilhaften Ausgestaltung beträgt der Anteil an Zusatzstoff mindestens 10 Gew.-%.

Das bedeutet, dass das Element wie beispielsweise ein Kettenglied aus einem Material aus höchstens 90 Gew.-% Kunststoff, wie beispielsweise PA 66, und mindestens 10 Gew.-% Zusatzstoff, insbesondere eine Mischung aus Kohlenstoffnanoröhren und Kohlenstofffasern hergestellt werden. Bevorzugt ist hierbei der Einsatz eines Zusatzstoffes mit einen Anteil von 21 bis 30 Gew.-%, wobei 20 Gew.-% Kohlenstofffasern und 1 bis 10 Gew.-% Kohlenstoffnanoröhren umfasst sind. Als besonders vorteilhaft haben sich folgende Zusammensetzungen herausgestellt:

| Gew.-% Kunststoff | Gew.-% Zusatzstoff |
|---|---|
| 80 | 20 |
| 60 | 40 |

Gemäß einer weiteren vorteilhaften Ausgestaltung erfüllt das Material, aus dem die Leitungsführungseinrichtung ausgebildet ist, mindestens eine der vorliegenden Bedingungen:
a) eine Zugfestigkeit von mehr als 150 MPa (Megapascal);
b) ein Zugmodul von mehr als 9.000 MPa;
c) eine Biegefestigkeit von mehr als 175 MPa; und
d) ein Elastizitätsmodul von mehr als 9.000 MPa.

Ein Material, welches mindestens eine der oben angegebenen Bedingungen a) bis d) und insbesondere mindestens zwei dieser Bedingungen erfüllt hat sich als besonders vorteilhaft bei der Ausbildung von Elementen von Leitungsführungseinrichtungen und Leitungsführungseinrichtungen erwiesen, das beziehungsweise die auch den Belastungen im Dauerbetrieb standhält.

Gemäß einer weiteren vorteilhaften Ausgestaltung ist der Zusatzstoff homogen verteilt ausgebildet.

Dies bedeutet insbesondere, dass der Gehalt an Zusatzstoff über das Element der Leitungsführungseinrichtung um höchstens 0,5 % schwankt. Hierdurch kann eine Reduktion des gesamten elektrischen Widerstandes des Elementes und der Leitungsführungseinrichtung erreicht werden.

Gemäß einer weiteren vorteilhaften Ausgestaltung des erfindungsgemäßen Elements einer Leitungsführungseinrichtung ist der Gehalt an Zusatzstoff räumlich inhomogen.

Insbesondere ist es bevorzugt, den Zusatzstoff Oberflächennah verstärkt auszubilden. So sind Ausgestaltungen des erfindungsgemäßen Elements und der erfindungsgemäßen Leitungsführungseinrichtung möglich, bei der die jeweiligen innen liegenden Bereiche des Elements oder der Leitungsführungseinrichtung, die nicht mit der Oberfläche in Kontakt stehen, praktisch zusatzstofffrei sind, während die oberflächennahen Bereiche einen relativ hohen Gehalt an Zusatzstoff aufweisen.

Weiterhin wird eine Leitungsführungseinrichtung zum Führen von Kabeln, Leitungen, Schläuchen und dergleichen zwischen einem ersten und einem zweiten Anschlusspunkt vorgeschlagen, die mindestens ein Element gemäß der vorliegenden Erfindung umfasst.

Hierbei können beispielsweise die Kettenglieder oder Teile der Kettenglieder als Elemente gemäß der vorliegenden Erfindung ausgebildet sein. Weiterhin kann als Element beispielsweise ein Tragband gemäß der vorliegenden Erfindung ausgebildet sein, mit dem entsprechende weitere Elemente, die gemeinsam die Leitungsführungseinrichtung bilden, verbunden werden. Diese weiteren Elemente können alternativ oder zusätzlich nach der vorliegenden Erfindung ausgebildet sein.

Gemäß einer vorteilhaften Ausgestaltung einer erfindungsgemäßen Leitungsführungseinrichtung stellt die Leitungsführungseinrichtung eine elektrisch leitende Verbindung zwischen den Anschlusspunkten her.

So ist es möglich, eine beispielsweise bei dem Verfahren beziehungsweise Bewegen der Leitungsführungseinrichtung durch Reibung entstehende elektrostatische Aufladung abzuleiten.

Besonders vorteilhaft ist weiterhin eine Ausgestaltung, bei der mindestens ein Anschlusspunkt, bevorzugt ein statischer, fester Anschlusspunkt, geerdet ist. Alternativ oder zusätzlich ist auch eine Erdung der Leitungsführungseinrichtung beispielsweise durch Erdung mindestens eines Kettengliedes möglich.

Gemäß einer weiteren vorteilhaften Ausgestaltung der erfindungsgemäßen Leitungsführungseinrichtung beträgt ein elektrischer Widerstand der Leitungsführungseinrichtung weniger als 1·10⁻⁸ Ohm.

Ein entsprechend geringer elektrischer Widerstand führt zu einer guten Ableitfähigkeit von elektrostatischen Aufladungen. Diese kann insbesondere durch Herstellung von elektrischen Verbindungen zwischen benachbarten Elementen wie beispielsweise Kettengliedern der Leitungsführungseinrichtung erreicht werden. Hierzu kann bevorzugt eine entsprechende Ausbildung mit Zusatzstoffen insbesondere in den die Verbindung benachbarter Kettenglieder vermittelnden Bereichen und diese verbindenden Bereiche vorliegen.

Gemäß einem weiteren Aspekt der vorliegenden Erfindung wird ein Verfahren zur Herstellung mindestens eines Elementes einer Leitungsführungseinrichtung vorgeschlagen, bei dem das Element aus mindestens einem Kunststoff und einem Zusatzstoff umfassend Kohlenstoffnanoröhren hergestellt wird.

Grundsätzlich wird unter dem Begriff Kunststoff auch ein faserverstärkter Kunststoff, insbesondere ein faserverstärkter Kunststoff verstanden. Neben Kunststoffnanoröhren kann der Zusatzstoff weitere Stoffe wie beispielsweise auch Kohlenstofffasern umfassen.

Ein Element einer Leitungsführungseinrichtung kann beispielsweise ein Kettenglied, eine Kettenlasche, eine Traverse und/oder einen Quersteg eines Kettengliedes umfassen. Weiterhin wird unter dem Begriff eines Elementes einer Leitungsführungseinrichtung beispielsweise auch ein bandförmigerer Grundkörper der Leitungsführungseinrichtung verstanden, mit dem weitere Elemente verbindbar sind.

Gemäß einer vorteilhaften Ausgestaltung des erfindungsgemäßen Verfahrens wird das Element spritzgegossen.

Gemäß einer weiteren vorteilhaften Ausgestaltung des erfindungsgemäßen Verfahrens wird das Element extrudiert.

Gemäß einer weiteren vorteilhaften Ausgestaltung des erfindungsgemäßen Verfahrens wird wenigstens ein Bereich des Elementes der Leitungsführungseinrichtung mit einer Beschichtung umfassend Kohlenstoffnanoröhren ausgebildet.

So ist es möglich, oberflächennahe Bereiche des Elementes einer Leitungsführungseinrichtung mit Kohlenstoffnanoröhren auszubilden, während darunterliegende weitere Bereiche der Leitungsführungseinrichtung wie beispielsweise sogenannte Grundkörper oder Einlagen kohlenstoffnanoröhrenfrei ausgebildet werden können.

Gemäß einer weiteren vorteilhaften Ausgestaltung des erfindungsgemäßen Verfahrens wird eine Mehrkomponentenspritzverfahren eingesetzt.

So können insbesondere Bauteile mittels eines Zweikomponentenspritzverfahrens hergestellt werden.

Die für die erfindungsgemäße Leitungsführungseinrichtung offenbarten Details und Vorteile lassen sich jeweils aufeinander und auf das erfindungsgemäße Verfahren anwenden und übertragen und jeweils umgekehrt. Im Folgenden wird die Erfindung unter Bezugnahme auf die beigefügten Zeichnungen näher erläutert ohne auf die dort gezeigten Details beschränkt zu sein. Die Figuren zeigen schematisch:
- Fig. 1: ein erstes Ausführungsbeispiel einer erfindungsgemäßen Leitungsführungseinrichtung;
- Fig. 2: eine erste Ansicht eines Elementes des ersten Ausführungsbeispiels einer Leitungsführungseinrichtung;
- Fig. 3: schematisch eine zweite Ansicht eines Elementes des ersten Ausführungsbeispiels einer erfindungsgemäßen Leitungsführungseinrichtung;
- Fig. 4: eine perspektivische Ansicht eines Elementes des ersten Ausführungsbeispiels einer Leitungsführungseinrichtung; und
- Fig. 5: eine seitliche Ansicht eines zweiten Ausführungsbeispiels einer erfindungsgemäßen Leitungsführungseinrichtung;
- Fig. 6: eine seitliche Ansicht eines dritten Ausführungsbeispiels einer erfindungsgemäßen Leitungsführungseinrichtung; und
- Fig. 7: eine perspektivische Ansicht eines Elementes des dritten Ausführungsbeispiels einer erfindungsgemäßen Leitungsführungseinrichtung.

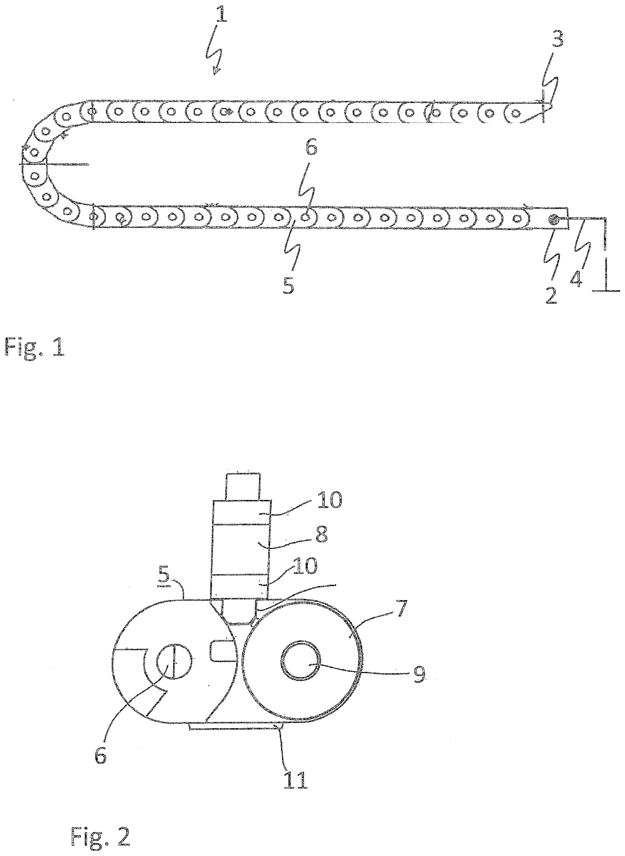

Fig. 1 zeigt schematisch ein erstes Ausführungsbeispiel einer erfindungsgemäßen Leitungsführungseinrichtung 1 in der Seitenansicht. Diese Leitungsführungseinrichtung 1 dient zum Führen von Kabeln, Leitungen, Schläuchen und dergleichen in ihrem Inneren zwischen einem ersten Anschlusspunkt 2 und einem zweiten Anschlusspunkt 3. In diesem Ausführungsbeispiel ist der erste Anschlusspunkt 2 ortsfest, während der zweite Anschlusspunkt 3 beweglich ist. Es ist ebenfalls möglich, dass sowohl der erste Anschlusspunkt 2 als auch der zweite Anschlusspunkt 3 beweglich ausgeführt sind. Der zweite Anschlusspunkt 3 ist im vorliegenden Ausführungsbeispiel an einer nicht näher dargestellten Maschine ausgebildet, so dass diese über die Leitungsführungseinrichtung beispielsweise mit Strom, Steuersignalen, Druckluft, Wasser, Verbrauchsmedium, Absaugung, etc. versorgt und entsprechend auch Daten von der Maschine übertragen werden können.

Gemäß der vorliegenden Erfindung ist die Leitungsführungseinrichtung 1 aus Elementen, nämlich Kettengliedern 5 aus einem Kunststoff oder einem Zusatzstoff ausgebildet. Insbesondere handelt es sich bei dem Kunststoff um einen glasfaserverstärkten Kunststoff, der Zusatzstoff umfasst Kohlenstoffnanoröhren.

Der erste Anschlusspunkt 2 ist mit einer Erdung 4 verbunden. Im Betrieb der Leitungsführungseinrichtung wird der zweite Anschlusspunkt 3 gegenüber dem ersten Anschlusspunkt 2 bewegt. Dies führt zu einer Rollbewegung der Leitungsführungseinrichtung 1. Die Leitungsführungseinrichtung 1 ist durch einzelne Kettenglieder 5 ausgebildet. Diese Kettenglieder 5 sind durch entsprechende Zapfen 6 miteinander verbunden. Benachbarte Kettenglieder 5 können gegeneinander verschwenkt werden.

Durch die erfindungsgemäße Ausführung der Leitungsführungseinrichtung 1 bzw. der Kettenglieder 5 ist es möglich, eine eventuell bestehende elektrostatische Aufladung der Leitungsführungseinrichtung 1 durch den abgesenkten elektrischen Widerstand im Vergleich zu nicht erfindungsgemäßen Leitungsführungseinrichtungen 1 zur Erdung 4 abzuleiten. Dadurch kann die erfindungsgemäße Leitungsführungseinrichtung 1 auch in Bereichen eingesetzt werden, wo eine elektrostatische Aufladung zu Folgeschäden an benachbarten Bauteilen führen kann.

Fig. 2 zeigt schematisch ein erfindungsgemäßes Element, ein Kettenglied 5. Ein Kettenglied 5 umfasst jeweils zwei Kettenlaschen 7. Diese Kettenlaschen 7 sind parallel zueinander ausgebildet und werden durch mindestens einen Quersteg 8 miteinander verbunden. Jede Kettenlasche 7 weist neben dem Zapfen 6 auch eine entsprechende Bohrung 9 auf. Zapfen 6 und Bohrung 9 der Kettenlasche 7 sind so ausgebildet, dass benachbarte Kettenlaschen 7 durch Einführen des Zapfens 6 in die Bohrung 9 miteinander verbunden werden können. Die Querstege 8 können verschwenkbar gegen die Kettenlasche 7 oder fest mit diesem verbindbar oder verbunden ausgebildet sein. Im vorliegenden Ausführungsbeispiel weist das Kettenglied 5 im Bereich des Querstegs 8 Auflagen 10 auf, bei denen bei einer nicht durch eine Führungseinrichtung wie eine Führungsrinne geführten Leitungsführungseinrichtung 1 das Obertrum auf dem Untertrum der Leitungsführungseinrichtung aufliegen kann.

Weiterhin weist die Kettenlasche 7 Gleitschuhe 11 auf, mittels derer die Leitungsführungseinrichtung 1 auf einer entsprechend ausgebildeten Führungseinrichtung oder einem darunter liegenden Teil der Leitungsführungseinrichtung 1 bewegbar ist. Grundsätzlich ist die Ausbildung der Gleitschuhe 11 aus einem anderen Kunststoff z. B. zur Geräuschdämmung als der Rest der Kettenlasche 7 bzw. des Kettengliedes 5 bevorzugt.

Es ist im Rahmen der vorliegenden Erfindung möglich insbesondere in speziellen Bereichen eine erhöhte Konzentration des Zusatzstoffes oder ausschließlich dort eine Konzentration des Zusatzstoffes vorzusehen. Bevorzugt handelt es sich hierbei um Bereiche wie beispielsweise den Zapfen 6, die Bohrung 9, die Auflage 10 und den Gleitschuh 11. Innerhalb eines Kettengliedes 5 können auch die dazwischen liegenden Bereiche mit einer entsprechenden Konzentration an Zusatzstoffen oder durch eine metallische Einlage so ausgebildet werden, dass eine Ableitung eventueller entstehender elektrostatischer Aufladung durch diese Bereiche zur Erdung 4 möglich ist.

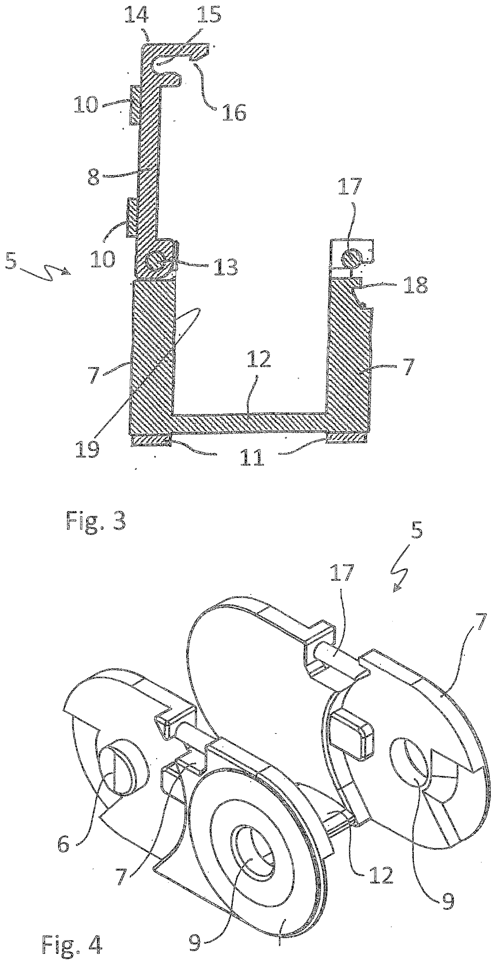

Fig. 3 zeigt schematisch eine weitere Ansicht eines Kettengliedes 5 zum Aufbau einer erfindungsgemäßen Leitungsführungseinrichtung 1. Dieses Kettenglied 5 weist einen angeformten unteren Quersteg 12, sowie einen verschwenkbaren oberen Quersteg 8 auf. Der verschwenkbare Quersteg 8 ist um einen Bolzen 13 verschwenkbar. Das gegenüberliegende Verbindungsende 14 des Querstegs 8 weist eine Bolzenaufnahme 15 und eine Rastnase 16 auf. Weiterhin weist das Kettenglied 5 einen Bolzen 17 auf, der korrespondierend zur Bolzenaufnahme 15 ausgebildet ist. Weiterhin ist ein Vorsprung 18 ausgebildet, der mit der entsprechenden Rastnase 16 korrespondiert. Das Kettenglied 5 definiert einen Aufnahmeraum 19, in dem Kabel, Leitungen, Schläuche und dergleichen geführt werden können. Dieser Aufnahmeraum 19 ist durch Schließen des oberen schwenkbaren Quersteges 8 abgrenzbar, so dass ein Verlieren der geführten Kabel, Leitungen, Schläuche und dergleichen unterbunden werden kann.

Fig. 4 zeigt eine perspektivische Ansicht eines erfindungsgemäßen Kettengliedes 5. Erfindungsgemäß können einzelne Teilbereiche des Kettengliedes 5 wie beispielsweise der Zapfen 6, der Quersteg 8, der Bolzen 17, die Kettenlasche 7, die Bohrung 9, der Gleitschuh 11 und/oder die Auflage 10 mit einer erhöhten Konzentration von Zusatzstoff in Form von zumindest Kohlenstoffnanoröhren ausgebildet sein um so eine elektrische Verbindung zwischen den einzelnen Kettengliedern bzw. der Leitungsführungseinrichtung 1 und der Erdung 4 herzustellen.

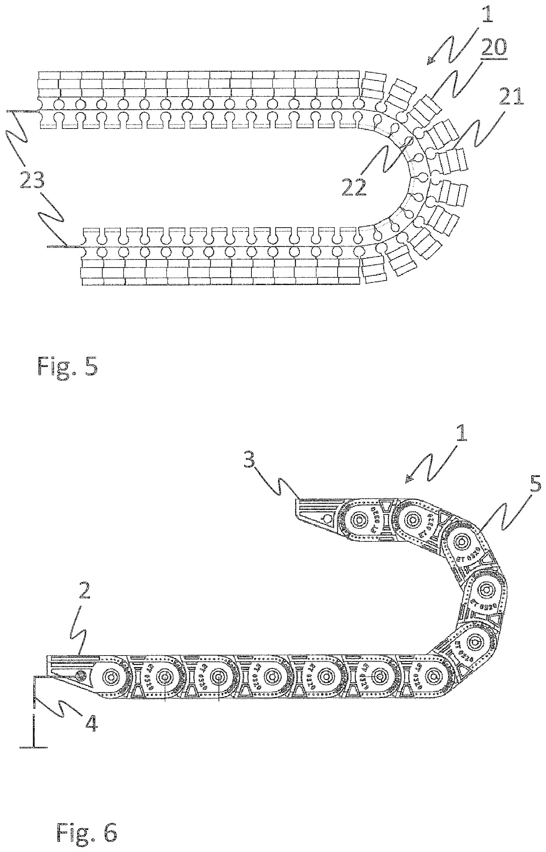

Fig. 5 zeigt ein Element 20 eines zweiten Ausführungsbeispiels einer erfindungsgemäßen Leitungsführungseinrichtung 1, die nicht aus einzelnen Kettengliedern ausgebildet ist, sondern die aus einem Kunststoff in einem Stück ausgebildet ist. Durch entsprechende Einschnitte 21 und Schwenkachsen 22 ist die entsprechende Auslenkbarkeit der Leitungsführungseinrichtung 1 gegeben. Das zweite Ausführungsbeispiel einer Leitungsführungseinrichtung 1 kann durch ein einzelnes entsprechendes Element 20 oder mehrere miteinander verbundene Elemente 20 gebildet werden.

Das Element 20 ist aus einem Kunststoff und einem Zusatzstoff umfassend Kohlenstoffnanoröhren ausgebildet. Das Element 20 umfasst ferner ein Zugelement 23, welches aus Draht ausgebildet ist. Bevorzugt ist das Element 20 so gestaltet, dass die Kohlenstoffnanoröhren ein Ableiten der elektrostatischen Aufladung zu dem Zugelement 23 erlauben, welches entsprechend geerdet ist.

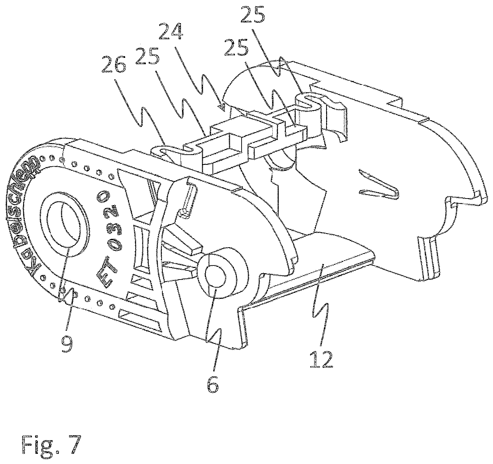

Fig. 6 zeigt ein drittes Ausführungsbeispiel einer erfindungsgemäßen Leitungsführungseinrichtung 1. Diese ist aus ist aus Kettengliedern 5 aufgebaut, die in Fig. 7 im Detail gezeigt sind. Gleiche Teile sind hierbei mit gleichen Bezugszeichen versehen. Das dritte Ausführungsbeispiel zeigt hierbei einen angeformten Quersteg 12 und einen zweiteiligen Quersteg 24 aus zwei Teilstegen 25. Diese Teilstege 25 sind um entsprechende Schwenkachsen 26 gegen eine Rückstellkraft verschwenkbar.

Das erfindungsgemäße Element einer Leitungsführungseinrichtung 1, die erfindungsgemäße Leitungsführungseinrichtung 1, sowie das erfindungsgemäß hergestellte Element einer Leitungsführungseinrichtung 1 können in vorteilhafter Weise zur Ableitung elektrostatischer Aufladungen der Leitungsführungseinrichtung 1 eingesetzt werden. So können entsprechende Leitungsführungseinrichtungen 1 auch in elektrostatisch abzusichernden Arbeitsumgebungen zum Einsatz kommen.

### Bezugszeichenliste

- 1: Leitungsführungseinrichtung
- 2: erster Anschlusspunkt
- 3: zweiter Anschlusspunkt
- 4: Erdung
- 5: Kettenglied
- 6: Zapfen
- 7: Kettenlasche
- 8: Quersteg
- 9: Bohrung
- 10: Auflage
- 11: Gleitschuh
- 12: angeformter Quersteg
- 13: Bolzen
- 14: Verbindungsende
- 15: Bolzenaufnahme
- 16: Rastnase
- 17: Bolzen
- 18: Vorsprung
- 19: Aufnahmeraum
- 20: Element
- 21: Einschnitt
- 22: Schwenkachse
- 23: Zugelement
- 24: zweiteiliger Quersteg
- 25: Teilsteg
- 26: Schwenkachse

## Patentansprüche

1. Leitungsführungseinrichtung (1) zum Führen von Kabeln, Leitungen, Schläuchen und dergleichen zwischen einem ersten und einem zweiten Anschlusspunkt (3) und wobei mindestens einer der Anschlusspunkte (3) beweglich ist, umfassend mindestens ein Element (5, 6, 7, 8, 9, 10, 11, 12, 20) der Leitungsführungseinrichtung, wobei das Element (5, 6, 7, 8, 9, 10, 11, 12, 20) aus einem Material umfassend mindestens einen Kunststoff und einen Zusatzstoff enthaltend Kohlenstoff ausgebildet ist, **dadurch gekennzeichnet, dass** der Zusatzstoff Kohlenstoffnanoröhren umfasst.

2. Leitungsführungseinrichtung nach Anspruch 1, bei der der Zusatzstoff Kohlenstofffasern umfasst.

3. Leitungsführungseinrichtung nach einem der vorhergehenden Ansprüche, bei der der Anteil an Zusatzstoff mindestens 10 Gew.-% beträgt.

4. Leitungsführungseinrichtung nach einem der vorhergehenden Ansprüche, bei der das Material mindestens eine der folgenden Bedingungen erfüllt:
a) eine Zugfestigkeit von mehr als 150 MPa (Megapascal);
b) ein Zugmodul von mehr als 9.000 MPa;
c) eine Biegefestigkeit von mehr als 175 MPa; und
d) ein Elastizitätsmodul von mehr als 9.000 MPa.

5. Leitungsführungseinrichtung nach einem der vorhergehenden Ansprüche, bei der der Zusatzstoff homogen verteilt ausgebildet ist.

6. Leitungsführungseinrichtung nach einem der Ansprüche 1 bis 5, bei der Gehalt an Zusatzstoff räumlich inhomogen ist.

7. Leitungsführungseinrichtung (1) nach einem der Ansprüche 1 bis 6, bei der die Leitungsführungseinrichtung (1) eine elektrisch leitende Verbindung zwischen den Anschlusspunkten (2, 3) herstellt.

8. Leitungsführungseinrichtung (1) nach einem der Ansprüche 1 bis 7, bei dem mindestens ein Anschlusspunkt (2, 3) geerdet ist.

9. Leitungsführungseinrichtung (1) nach einem der Ansprüche 1 bis 8, bei der ein elektrischer Widerstand weniger als 1 • 10_{"}^{&} Ohm beträgt.

10. Verfahren zur Herstellung mindestens eines Elementes (5, 6, 7, 8, 9, 10, 11, 12, 20) einer Leitungsführungseinrichtung (1) zum Führen von Kabeln, Leitungen, Schläuchen und dergleichen zwischen einem ersten (2) und einem zweiten Anschlusspunkt (3) und mindestens einer der Anschlusspunkte (3) beweglich ist, bei dem das Element (5, 6, 7, 8, 9, 10, 11, 12, 20) aus mindestens einem Kunststoff und einem Zusatzstoff umfassend Kohlenstoffnanoröhren hergestellt wird.

11. Verfahren nach Anspruch 10, bei dem das Element (5, 6, 7, 8, 9, 10, 11, 12, 20) spritzgegossen wird.

12. Verfahren nach Anspruch 10, bei dem das Element (5, 6, 7, 8, 9, 10, 11, 12, 20) extrudiert wird.

13. Verfahren nach einem der Ansprüche 10 bis 12, bei dem wenigstens ein Bereich des Elementes (5, 6, 7, 8, 9, 10, 11, 12, 20) der Leitungsführungseinrichtung (1) mit einer Beschichtung umfassend Kohlenstoffnanoröhren ausgebildet wird.

14. Verfahren nach einem der Ansprüche 10 bis 11 oder 12, bei dem ein Mehrkomponentenspritzverfahren eingesetzt wird.

## Claims

1. A cable carrier device (1) for carrying cables, lines, hoses and the like between a first and a second connection point (3), and in which at least one of the connection points (3) is movable, comprising at least one element (5, 6, 7, 8, 9, 10, 11, 12, 20) of the cable carrier device, in which the element (5, 6, 7, 8, 9, 10, 11, 12, 20) being formed from a material comprising at least one plastic and a filler comprising carbon, **characterized in that** the filler comprises carbon nanotubes.

2. The cable carrier device as claimed in claim 1, in which the filler comprises carbon fibers.

3. The cable carrier device as claimed in one of the preceding claims, in which the proportion of filler is at least 10% by weight.

4. The cable carrier device as claimed in one of the preceding claims, in which the material meets at least one of the following conditions:
a) a tensile strength of more than 150 MPa (megapascals)
b) a tensile modulus of more than 9000 MPa;
c) a flexural strength of more than 175 MPa; and
d) a modulus of elasticity of more than 9000 MPa.

5. The cable carrier device as claimed in one of the preceding claims, in which the filler is of a homogeneously distributed form.

6. The cable carrier device as claimed in one of claims 1 to 5, in which the filler content is spatially inhomogeneous.

7. The cable carrier device (1) as claimed in one of claims 1 to 6, in which the cable carrier device (1) establishes an electrically conducting connection between the connection points (2, 3).

8. The cable carrier device (1) as claimed in one of claims 1 to 7, in which at least one connection point (2, 3) is grounded.

9. The cable carrier device (1) as claimed in one of claims 1 to 8, in which an electrical resistance is less than 1·10⁻⁸ ohms.

10. A method for producing at least one element (5, 6, 7, 8, 9, 10, 11, 12, 20) of a cable carrier device (1), for carrying cables, lines, hoses and the like between a first (2) and a second connection point (3) and in which at least one connection point (3) is movable, in which the element (5, 6, 7, 8, 9, 10, 11, 12, 20) is produced from at least one plastic and a filler comprising carbon nanotubes.

11. The method as claimed in claim 10, in which the element (5, 6, 7, 8, 9, 10, 11, 12, 20) is injection-molded.

12. The method as claimed in claim 10, in which the element (5, 6, 7, 8, 9, 10, 11, 12, 20) is extruded.

13. The method as claimed in one of claims 10 to 12, in which at least one region of the element (5, 6, 7, 8, 9, 10, 11, 12, 20) of the cable carrier device (1) is formed with a coating comprising carbon nanotubes.

14. The method as claimed in one of claims 10 to 11 or 12, in which a multi-component injection-molding process is used.

## Revendications

1. Dispositif de guidage de lignes/conduits (1) destiné à guider des câbles, des lignes, des tuyaux et similaires entre un premier et un deuxième points de raccordement (3) et au moins un des points de raccordement (3) étant mobile, le dispositif de guidage de lignes/conduits comprenant au moins un élément (5, 6, 7, 8, 9, 10, 11, 12, 20), l'élément (5, 6, 7, 8, 9, 10, 11, 12, 20) étant formé d'un matériau comprenant au moins une matière plastique et un additif contenant du carbone, **caractérisé en ce que** l'additif comprend des nanotubes de carbone.

2. Dispositif de guidage de lignes/conduits selon la revendication 1, l'additif comprenant des fibres de carbone.

3. Dispositif de guidage de lignes/conduits selon l'une des revendications précédentes, la proportion d'additif étant d'au moins 10 % en poids.

4. Dispositif de guidage de lignes/conduits selon l'une des revendications précédentes, le matériau remplissant au moins l'une des conditions suivantes :
a) une résistance à la traction supérieure à 150 MPa (mégapascals);
b) un module de traction supérieur à 9000 MPa ;
c) une résistance à la flexion supérieure à 175 MPa ; et
d) un module d'élasticité supérieur à 9000 MPa.

5. Dispositif de guidage de lignes/conduits selon l'une des revendications précédentes, l'additif étant réparti de manière homogène.

6. Dispositif de guidage de lignes/conduits selon l'une des revendications 1 à 5, la teneur en additif n'étant pas spatialement homogène.

7. Dispositif de guidage de lignes/conduits (1) selon l'une des revendications 1 à 6, le dispositif de guidage de lignes/conduits (1) établissant une liaison électriquement conductrice entre les points de raccordement (2, 3).

8. Dispositif de guidage de lignes/conduits (1) selon l'une des revendications 1 à 7, au moins un point de raccordement (2, 3) étant mis à la terre.

9. Dispositif de guidage de lignes/conduits (1) selon l'une des revendications 1 à 8, une résistance électrique étant inférieure à 1·10⁻⁸ ohms.

10. Procédé de fabrication d'au moins un élément (5, 6, 7, 8, 9, 10, 11, 12, 20) d'un dispositif de guidage de lignes/conduits (1) destiné à guider des câbles, des lignes, des tuyaux et similaires entre un premier point de raccordement (2) et un deuxième point de raccordement (3) et au moins un des points de raccordement (3) étant mobile, l'élément (5, 6, 7, 8, 9, 10, 11, 12, 20) étant fabriqué à partir d'au moins une matière plastique et d'un additif comprenant des nanotubes de carbone.

11. Procédé selon la revendication 10, l'élément (5, 6, 7, 8, 9, 10, 11, 12, 20) étant moulé par injection.

12. Procédé selon la revendication 10, l'élément (5, 6, 7, 8, 9, 10, 11, 12, 20) étant extrudé.

13. Procédé selon l'une des revendications 10 à 12, au moins une partie de l'élément (5, 6, 7, 8, 9, 10, 11, 12, 20) du dispositif de guidage de lignes/conduits (1) étant formée avec un revêtement comprenant des nanotubes de carbone.

14. Procédé selon l'une des revendications 10 à 11 ou 12, un procédé d'injection à composants multiples étant utilisé.
